# EUROPEAN PATENT SPECIFICATION

(11) **EP 4 041 697 B1**
(45) Date of publication and mention of the grant of the patent: **10.07.2024**
(21) Application number: 20785508.1
(22) Date of filing: 05.10.2020
(51) Int. Cl.: C04B 26/28, C04B 26/14, C04B 26/04, C04B 26/00, C04B 26/16, C04B 26/32, C04B 30/00, C04B 41/00, C04B 41/48, C04B 41/52, C04B 41/63, C04B 41/71, C09K 21/12, C09D 5/18, C04B 111/00, C04B 111/28

(54) **SILICA-BASED THERMAL-INSULATION SHEET COATED WITH INTUMESCENT COMPOSITION**
AUF SILICIUMDIOXID BASIERENDE WÄRMEDÄMMPLATTE MIT EINER BESCHICHTUNG AUS EINER INTUMESZENTEN ZUSAMMENSETZUNG
FEUILLE D'ISOLATION THERMIQUE À BASE DE SILICE REVÊTUE D'UNE COMPOSITION INTUMESCENTE

(30) Priority: 07.10.2019 EP 19201609
(43) Date of publication of application: 17.08.2022
(73) Proprietor: Kingspan Insulation Limited, Leominster, Herefordshire HR6 9LA (GB)
(72) Inventor: JUNG, Oliver, 65611 Brechen (DE)
(74) Representative: Tomkins & Co
(86) International application number: PCT/EP2020/077794
(87) International publication number: WO 2021/069351

(56) References cited:
- WO-A1-2018/210605
- WO-A1-2019/011780
- US-A1- 2016 222 226
- DATABASE WPI Week 201815, Derwent World Patents Index; AN 2018-146113, XP002798452

## Description

### Field of the invention

The present invention relates to a silica-based thermal-insulation sheet coated with an intumescent composition, a process for producing the same and the use thereof for fire-retardant thermal insulation materials.

### Prior art

Effective thermal insulation of houses, industrial plants, pipelines and suchlike is an important economic problem. The majority of insulation materials based on organic substances, such as polyurethane foams, are combustible and only usable at relatively low temperatures. These disadvantages are not exhibited by the thermal-insulation materials based on inorganic oxides, for example highly porous silicon dioxide.

Such silicon dioxide-based thermal-insulation materials are typically based on the aerogels, and also precipitated or fumed silicas.

The typically used thermal-insulation materials based on silicon dioxide include vacuum insulating panels (VIPs), hydrophilic or hydrophobic silica-based thermal-insulation sheets, fibre reinforced aerogel mats.

WO 2019/011780 A1 discloses a hydrophilic thermal-insulation sheet having a density of 130-200 g/l, containing 70-95% by weight of aggregated particles of a hydrophilic silica having a BET surface area of 300-400 m2/g and a thickening of at least 5000 mPas, 4-30% by weight of IR opacifier, 1-10% by weight of fibres and 0-25% by weight of fine additives. The hydrophilic silica can be rendered hydrophobic.

US 2016/222226 describes an intumescent coating composition comprising a polyisocyanate, a polyfunctional isocyanate-reactive compound (polyol, cf. claim 5; these 2 compounds form a polyurethane binder) and an intumescent ingredient, wherein the intumescent ingredient contains at least one or more compounds containing phosphorus, nitrogen and boron atoms and the weight ratio of phosphorus to nitrogen in said intumescent ingredient is between 0.5/1 to 1.5/1 and the amount of boron is from 1 to 5 wt % based on the coating composition.

EP 1988228 A1 describes a press process to form hydrophobic, microporous thermal-insulation mouldings by addition of organosilanes during a mixing process. The resulting thermal-insulation mouldings are hydrophobized throughout.

WO 2013/013714 A1 discloses a process for producing silica-containing thermal-insulation mouldings hydrophobized throughout by treatment of corresponding hydrophilic mouldings with gaseous hydrophobization agents.

Such thermal-insulation materials as disclosed in EP 1988228 A1 and
WO 2013013714 A1, exhibit good thermal-insulating properties, but are usually fragile and cannot be efficiently after-treated with water-based coating agents.

To overcome these problems, it was suggested in WO 2012049018 A1 to either a) treat the hydrophobic moulded thermal insulation body with a polar fluid mixable with water, e.g. an alcohol or b) expose it to a brief temperature treatment, e.g. at 150 - 500 °C to render the surface of the thermal insulation body hydrophilic before treatment with a water-based coating.

Organic-based coating agents might be compatible with a hydrophobic surface of hydrophobized silica-based thermal insulation sheets. However, using usual organic-based coatings would inevitably increase the combustibility of the resulting coated material and therefore let the original benefit of silica-based thermal insulation materials, their fire-resistance, at least partly disappear.

Sometimes, for example in the case of insulating of balcony elements of the buildings, it is necessary to use a composite thermal insulation body comprising a combustible organic insulation material, such as polystyrene foam, covered with a non-combustible silica-based material. Thus, the typical organic thermal insulating materials used for thermal insulation of balcony elements, like Styropor^{®} and Neopor^{®} with a flammability classification B-E according to DIN EN 13501, may achieve the fire classes REI60, REI90 and REI120 only if additional fire-resistant thermal insulation sheets made of e.g. calcium silicate or fibre cement are applied. The purpose of such silica-based insulating materials in this case is to avoid overheating and inflammation of the core organic insulating material.

The use of usual combustible organic-based coatings for the silica-based material in this case would be disadvantageous.

### Problem and solution

It is an object of the present invention to provide a practical way of improving the surface stability of silica-based thermal-insulation sheets without detrimentally affecting the overall fire-resistance of such thermal-insulation materials and the thermal insulation composites thereof. Another object of the present invention is to provide a composite containing both an organic and a silica-based thermal-insulation materials with prolongated stability against inflammation and combustion in case of fire.

It was surprisingly found that silica-based thermal-insulation sheets can be efficiently coated with certain intumescent polymer compositions to provide mechanically stable, dust-free coated thermal insulation sheets with an increased stability against inflammation and combustion.

### Coated thermal insulation sheet

The invention provides coated thermal-insulation sheet comprising at least 50 % by weight of silica, coated with a layer of an intumescent composition, wherein the composition comprises at least one polyol, at least one nitrogen-containing compound, at least one phosphorus-containing compound, and at least one binder, wherein the binder is selected from the group consisting of (meth)acrylates, alkyd resins, epoxy resins, gum Arabic, casein, vegetable oils, silicone resins, wax, cellulose glue and mixtures thereof.

An intumescent composition or simply an intumescent is a material that swells as a result of exposure to heating, e.g. to a temperature of above 200°C, thus increasing in volume and decreasing in density. An intumescent composition is a combination of various compounds that in the event of fire react together because of the temperature increase to form a carbon foam. This foam usually attains a thickness of 10 to 100 times of the originally applied coating and insulates the substrate material through its low thermal conductivity. This foamed char hinders the release of combustible gasses while also forming a protective layer that shields the underlying material from the heat of the flame.

Typically, the char formed from an intumescent composition in case of fire consist of microporous carbonaceous foam, which can be formed by a chemical reaction of ammonium polyphosphate, pentaerythritol and melamine. The reaction takes place in a matrix formed by the molten binder.

WO 2014131912 A1 describes such an intumescent epoxy resin-based fire-protecting coating comprising ammonium polyphosphate and a polyol, e.g. pentaerythritol.

The thermal insulation sheet of the present invention can have a thickness from 5 mm to 500 mm, preferably from 10 mm to 150 mm, more preferably from 15 mm to 50 mm.

The thermal insulation sheet of the invention is preferably highly porous and its pore volume < 4 µm is preferably more than 2.0 mL/g, more preferably from 2.0 mL/g to 6.0 mL/g, more preferably from 2.5 mL/g to 5.5 mL/g. The pore volume < 4 µm can be determined by mercury intrusion method according to DIN 66133, thereby a cumulative volume of all pores with a diameter of less than 4 µm is measured.

The thermal insulation sheet according to the invention can have a carbon content of from 0.5% to 20% by weight, preferably from 1.0% to 15% by weight, more preferably from 2.0% to 12% by weight. The carbon content may be determined by elemental analysis. The analysed sample is weighed into a ceramic crucible, provided with combustion additives and heated in an induction furnace under an oxygen flow. The carbon present is oxidized to CO₂. The amount of CO₂ gas is quantified by infrared detectors. SiC is not burned and therefore does not affect the value of the carbon content. The stated carbon content of the thermal insulation sheet according to the invention thus refers to all carbon-containing components of the granulate except silicon carbide, if the latter is used as an IR-opacifier.

Preferably, the thermal-insulation sheet according to the invention contains at least 50%, preferably 50%-96.5%, more preferably 60%-94%, even more preferably 68%-88% by weigh of silica; at least 3%, preferably 3%-30%, more preferably 5%-25%, even more preferably 10%-20% by weigh of an IR-opacifier; at least 0.5%, preferably 0.5%-20%, more preferably 1%-15%, even more preferably 2%-12% by weigh of carbon.

The thermal conductivity of the thermal insulation sheet of the invention, measured according to EN 12667:2001, at a mean measurement temperature of 10°C, a contact pressure of 250 Pa under an air atmosphere and at standard pressure (1 atm), is preferably less than 70 mW/(m*K), more preferably less than 50 mW/(m*K), still more preferable from 10 mW/(m*K) to 45 mW/(m*K), especially preferably from 12 mW/(m*K) to 40 mW/(m*K) and most preferably from 15 to 30 mW/(m*K).

The thermal insulation sheet can have a BET surface area of greater than 20 m²/g, preferably of 30 m²/g to 500 m²/g, more preferably of 50 m²/g to 400 m²/g, most preferably of 70 m²/g to 350 m²/g. The specific surface area, also referred to simply as BET surface area, can be determined according to DIN 9277:2014 by nitrogen adsorption in accordance with the Brunauer-Emmett-Teller method.

For measurements of carbon content and BET surface area, a powder sample produced by crashing a part of the thermal insulation sheet can be analysed.

### Silica

The thermal-insulation sheet according to the invention contains at least 50%, preferably 50%-96.5%, more preferably 60%-94%, even more preferably 68%-88% by weigh of silica.

The silica can be selected from the group consisting of fumed silica, precipitated silica, silica aerogel, silica xerogel, silicate mineral or clay mineral, perlite, silica glass, mineral wool and mixtures thereof.

Silicate minerals are ionic solids, whose anions consist predominantly of silicate anions SiO₃²⁻. Each silicon atom is the centre of a tetrahedron, whose corners are four oxygen atoms covalently bound to silicon. Two adjacent tetrahedral may share a vertex. Apart from Si and O atoms, silicate minerals may contain alkali metals, alkaline earths and other metal cations. One group of silicate minerals is clays, also known as clay minerals, are hydrous aluminium phyllosilicates (sheet silicates), sometimes with variable amounts of iron, magnesium, alkali metals, alkaline earths, and other cations found on or near some planetary surfaces. The examples of clay minerals are halloysite, kaolinite, illite, montmorillonite, vermiculite, talc, sepiolite, palygorskite and pyrophylite.

The thermal insulation sheet according to the invention preferably comprises amorphous silica. Amorphous or non-crystalline silica lacks the long-range order that is characteristic of a crystal silica, such as present e.g. in quartz.

The amorphous silica present in the thermal insulation sheet of the invention is preferably selected from fumed silica, precipitated silica, silica aerogel, silica xerogel, silica glass, mineral wool and mixtures thereof.

The silica produced by precipitation (precipitated silica) is formed, for example, during the reaction of water glass solutions (water-soluble sodium silicates) with mineral acids.

Silica aerogels can be formed by supercritical drying of a SiO₂ gel produced by a so-called sol-gel process. The starting materials for SiO₂ sol synthesis are often silicon alcoholates. The hydrolysis of such precursors and the condensation between the resulting reactive species are the main basic reactions of the sol-gel process. Tetraalkyl orthosilicates such as tetramethyl orthosilicate or tetraethyl orthosilicate are particularly suitable as silicon sources. The alcohol produced during the hydrolysis of tetraalkyl orthosilicates is removed under supercritical conditions (for methanol, temperature > 239.4 °C; pressure > 80.9 bar), which leads to the formation of highly porous SiO₂ aerogels.

By drying under subcritical conditions, materials with almost identical properties to supercritically dried aerogels, usually called silica xerogels, can be produced. This method is described for example in US 5565142 A1.

Silica glass or simply glass, also sometimes referred to as fused silica or fused quartz is an amorphous silica type, which can be prepared by melting silica sand or quartz.

Mineral wool is a fibrous amorphous material formed by spinning or drawing molten mineral or rock materials such as slag and ceramics. There are several types of mineral wool. Thus, alkaline earth silicate wool (AES wool) consists of amorphous glass fibres that are produced by melting a combination of calcium oxide (CaO), magnesium oxide (MgO), and silicon dioxide (SiO₂). Aluminosilicate wool (ASW) consists of amorphous fibres produced by melting a combination of aluminium oxide (Al₂O₃) and silicon dioxide (SiO₂).

Particularly preferable is pyrogenic (fumed) silica. Fumed silicas are prepared by means of flame hydrolysis or flame oxidation. This involves oxidizing or hydrolysing hydrolysable or oxidizable starting materials, generally in a hydrogen/oxygen flame. Starting materials used for pyrogenic methods include organic and inorganic substances. Silicon tetrachloride is particularly suitable. The hydrophilic silica thus obtained is amorphous. Fumed silicas are generally in aggregated form. "Aggregated" is understood to mean that what are called primary particles, which are formed at first in the genesis, become firmly bonded to one another later in the reaction to form a three-dimensional network. The primary particles are substantially free of pores and have free hydroxyl groups on their surface. Such hydrophilic silicas can, as required, be hydrophobized, for example by treatment with reactive silanes.

### IR-opacifier

The thermal insulation sheet of the invention preferably comprises at least one IR-opacifier. The thermal-insulation sheet according to the invention can contain at least 3%, preferably 3%-30%, more preferably 5%-25%, even more preferably 10%-20% by weigh of an IR-opacifier.

Such an IR-opacifier can reduce the infrared transmittance of a heat-insulating material and thus minimize the heat transfer due to radiation. Preferably, the IR-opacifier is selected from the group consisting of silicon carbide, titanium dioxide, zirconium dioxide, ilmenites, iron titanates, iron oxides, zirconium silicates, manganese oxides, graphites, carbon blacks and mixtures thereof. The particle size of the IR-opacifiers is generally between 0.1 µm and 25 µm.

### Fibres and fillers

The thermal-insulation sheet of the invention can further comprise fibrous materials. Such fibrous materials, additionally referred to as fibres for simplification, can be of inorganic or organic origin. Examples of inorganic fibrous materials that can be used are glass wool, rock wool, basalt fibres, slag wool and ceramic fibres, these deriving from melts comprising aluminium and/or silicon dioxide, and also from other inorganic metal oxides. Examples of pure silicon dioxide fibres are silica fibres. Examples of organic fibres which can be used are cellulose fibres, textile fibres and synthetic fibres. The diameter of the fibres is preferably 1-200 µm, particularly preferably 5-100 µm, and the basis weight is preferably 10-1000 g/m², particularly preferably 15-500 g/m².

Furthermore, inorganic filler materials, e.g. fine-particle metal oxides such as aluminium oxide, titanium dioxide, iron oxide can be added to the thermal-insulation sheet according to the invention.

### Hydrophobic treatment

The thermal insulation sheet of the present invention is preferably hydrophobized and then coated with an intumescent coating, that is a hydrophobized non-coated thermal insulation sheet is coated after a hydrophobization of the sheet has already occurred.

The terms "hydrophobized" or "hydrophobic" are identical in the context of the present invention relate to the silica-based thermal insulation sheet having a low affinity for polar media such as water.

The thermal insulation sheet according to the invention is preferably hydrophobized throughout, i.e. the surface of the hydrophobized thermal insulation sheet as well as its core possess water-repellent hydrophobic properties.

The hydrophobicity of the hydrophobic materials can typically be achieved by the application of appropriate nonpolar groups, e.g. alkyl silane groups to the silica surface. The extent of the hydrophobicity of a hydrophobic silica can be determined via parameters including its methanol wettability, as described in detail, for example, in WO2011/076518 A1, pages 5-6. To apply this analysis method to the thermal insulation sheet according to the invention, a portion of the thermal insulation sheet can be crushed to obtain a powder sample, which is further analysed.

The thermal insulation sheet according to the present invention preferably has a methanol wettability of methanol content greater than 5% by volume, more preferably of 10% to 80% by volume, more preferably of 15% to 70% by volume, especially preferably of 20% to 65% by volume, most preferably of 25% to 60% by volume in a methanol/water mixture.

### Intumescent composition

The intumescent composition preferably comprises 0.05% - 25% by weight, more preferably 0.5% - 20% by weight, particularly preferably 1% - 15% by weight, of at least one polyol; 0.05% - 30% by weight, more preferably 0.5% - 25% by weight, particularly preferably 1% - 20% by weight, of at least one nitrogen-containing compound; 0.05% - 25% by weight, more preferably 0.5% - 20% by weight, particularly preferably 1% - 15% by weight, of at least one phosphorus-containing compound; 30% - 99.85% by weight, more preferably 35% - 98.5% by weight, particularly preferably 50% - 97% by weight, of at least one binder. The contents of all components of the intumescent composition are based on the total weight of the composition.

The layer of the intumescent composition can have a thickness of 0.1 mm to 50 mm, preferably 0.2 mm to 20 mm, more preferably 0.5 mm to 10 mm.

### Polyol

The polyol is preferably selected from the group consisting of ethylene glycol, glycerol, pentaerythritol, dipentaerythritol, tripentaerythritol, polycondensates of pentaerythritol and pentaerythritol-based esters and polyols, maltitol, sorbitol, xylitol, isomalt, polyvinyl alcohol, and mixtures thereof. The polyol is preferably pentaerythritol or dipentaerythritol, in particular pentaerythritol.

### Nitrogen-containing compound

The nitrogen-containing compound is preferably selected from the group consisting of ammonia, ammonium salts, tetraalkylammonium salts, amines, melamine compounds and mixtures thereof.

The examples of suitable ammonium salts are ammonium phosphate and ammonium polyphosphates.

An example of tetraalkylammonium salt is tetra(n-butylammonium) chloride.

The examples of suitable amines are linear, branched or cyclic primary, secondary and tertiary alkylamines, such as triethylamine, cyclohexylamine, di(n-butyl)amine.

The melamine compound can be selected from the group consisting of melamine (1,3,5-triazine-2,4,6-triamine), melamine cyanurates, melamine monophosphates, melamine polyphosphates and melamine pyrophosphates. Most preferred is melamine.

### Phosphorus-containing compound

Preferred phosphorus-containing compounds comprise aromatic or aliphatic alkyl phosphates, such as in particular triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) and also ammonium phosphate, ammonium polyphosphates, red phosphorus and phosphoric acid, and mixtures thereof.

Among ammonium polyphosphates, most preferable are the ones with the formula (NH₄PO₃)ₙ wherein n = 200-2000, more preferably 600-1500.

Particularly preferred embodiments of the invention employ a liquid alkyl phosphate also suitable as a plasticizer, in particular tris(2-ethylhexyl)phosphate.

It is possible and in certain embodiments advantageous to employ different phosphorus-containing compounds as a mixture. A particularly advantageous mixture is for example the one containing a liquid alkyl phosphate which additionally serves as a plasticizer and an ammonium polyphosphate. This makes it possible to achieve a particularly high fire retardancy coupled with improved mechanical properties of the composition, for example in terms of elongation at break.

It may be advantageous to add to the composition further flame and fire retardants known to a person skilled in the art, such as for example aluminium hydroxide, magnesium hydroxide, zinc borate, halogenated compounds, such as bromine flame retardants.

### Binder

The intumescent composition comprises at least one binder, which joins the individual parts of the composition to one another and optionally to one or more fillers and/or other additives. Preferably, the binder is water-based, i.e. contains water or is water-compatible, that is well mixable with water.

The binder is selected from the group consisting of (meth)acrylates, alkyd resins, epoxy resins, gum Arabic, casein, vegetable oils, silicone resins, wax, cellulose glue and mixtures thereof. Such binders can lead to the curing of the intumescent composition used, for example by evaporation of the solvents, polymerization, crosslinking reaction or another type of physical or chemical transformation. Such curing can take place, for example, thermally or under the action of UV radiation or other radiation. Both single (one) component (1-C) and multicomponent systems, particularly two component systems (2-C) can be applied as binder. Particularly preferred for the present invention are (meth)acrylic and epoxy resins, especially epoxy binders.

(Meth)acrylic resins contain oligomers, polymers and/or copolymers based on acrylic and/or methacrylic acid and (meth)acrylic esters. Polyurethane resins contain oligomers, polymers and/or copolymers originating from polyaddition reaction of diols or polyols with polyisocyanates and contain characteristic urethane-groups (-NH-C(O)-O-). Epoxy resins, also known as polyepoxides, is a class of reactive prepolymers and polymers which contain epoxide groups. Epoxy resins may be reacted (cross-linked) either with themselves through catalytic homopolymerization, or with a wide range of co-reactants including polyfunctional amines, acids (and acid anhydrides), phenols, alcohols and thiols.

The intumescent composition or the binder can additionally contain at least one solvent and/or filler and/or other additives.

The solvent used in the composition can be selected from the group consisting of water, alcohols, aliphatic and aromatic hydrocarbons, ethers, esters, aldehydes, ketones and the mixtures thereof. For example, the solvent used can be water, methanol, ethanol, propanol, butanol, pentane, hexane, benzene, toluene, xylene, diethyl ether, methyl tert-butyl ether, ethyl acetate, and acetone. Particularly preferably, the solvents used in the intumescent composition have a boiling point of less than 300°C, particularly preferably less than 200°C. Such relatively volatile solvents can easily be evaporated or vaporized during the curing of the composition. Preferably, the intumescent composition contains water as a sole solvent or no solvent. Most preferably, the composition is solvent-free.

### Process for producing coated thermal-insulation sheet

A further object of the invention is a process for producing the coated thermal-insulation sheet according to the invention, comprising the steps:
a) producing a thermal-insulation sheet comprising silica;
b) optional treatment of the thermal-insulation sheet with a hydrophobizing agent to obtain a hydrophobized thermal-insulation sheet;
c) coating of the optionally hydrophobized thermal-insulation sheet with a layer of an intumescent composition comprising at least one polyol, at least one nitrogen-containing compound, at least one phosphorus-containing compound, and at least one binder;
d) drying and/or curing of the composition.

### Step a)

In step a) of the inventive process, a thermal-insulation sheet, preferably a hydrophilic thermal-insulation sheet is produced.

For this purpose, a silica powder, preferably a hydrophilic silica powder or a powder mixture comprising hydrophilic silica is compressed to produce a thermal-insulation sheet.

The powder mixture, apart from a silica powder, may comprise an IR-opacifier, fillers, fibres and other constituents. Mixing of the silica with the other such components can be conducted with all suitable mixing apparatuses known to those skilled in the art. Any mixers or mills that permit good homogenization, such as, for example, blade mixers, fluidized bed mixers, centrifugal mixers or air-swept mixers, plough bar mixers, pan mills or ball mills are suitable for this purpose.

After completion of the mixing process, the bulk density of the powder mixture comprising silica can be between 40 - 180 g/L, preferably 40 - 90 g/L, depending on the nature and the amount of the components. The flowability of the resultant mixture is usually very good, meaning that it can easily be pressed or compacted, to form a shaped body, for example to form thermal-insulation sheets, in a homogeneous manner. When pressing or compacting to form a shaped thermal-insulation body, it is possible to set a certain density, e.g. 100-400 g/L, and this substantially influences the thermal conductivity of the insulating material. The lower the density of the compacted material, the lower usually the thermal conductivity and the better the thermal-insulation properties. In the case of a density of less than approximately 100 g/L, the mechanical stability of the thermal-insulation sheet can deteriorate, however.

### Step b)

In optional step b) of the inventive process, the preferably hydrophilic thermal-insulation sheet is treated with a hydrophobization agent.

During this hydrophobic treatment step, a chemical reaction of the hydrophilic silica with the corresponding hydrophobization agent occurs, which by full or partial modification of free silanol groups of silica with hydrophobic groups, imparts hydrophobic properties to the thermal-insulation sheet comprising silica.

Particular preference is given in this connection to using a hydrophobization agent which is in gaseous form at a temperature for carrying out step b). Very particular preference is given to using as hydrophobization agent compounds which are liquid at 25°C and which have at least one alkyl group and a boiling point at standard pressure of less than 200°C.

It may be advantageous for the temperature to be set from 20°C to 300°C during step b) of the process according to the invention. As a result, it is possible to control the treatment time. Depending on the nature of the hydrophobization agent used, it may be particularly advantageous to choose a temperature from 50 to 200°C.

The duration of step b) can generally be from 1 minute to 24 hours, preferably from 10 minutes to 4 hours. The duration of step b) can be selected according to the specific requirements for the process and/or product properties. Thus, the lower treatment temperature usually requires the longer hydrophobization times.

Step b) of the process according to the invention can be carried out under the pressure of 0.1 to 10 bar. Most preferably, step b) is performed in a closed system under natural vapour pressure of the used hydrophobizing treatment reagent at the reaction temperature.

After completion of the treatment with hydrophobization agent, any excess of hydrophobization agent and reaction products can be removed from the now hydrophobic thermal-insulation sheet by heating.

Between steps a) and b) of the above-described process, an optional treatment of the thermal-insulation sheet produced in step a) with ammonia and/or water, preferably with gaseous ammonia or with water vapour, can be conducted. The duration over which this step of the process is conducted depends upon factors including the chemical composition, and temperature. The duration is generally from 1 minute to 20 hours, preferably 5 minutes to 2 hours. Preferred temperatures here are in the range from 0 to 200°C, more preferably from 20 to 100°C.

This treatment can improve the mechanical stability and/or the outcome of the hydrophobization process.

### Hydrophobizing agent

The thermal-insulation sheet of the invention is preferably hydrophobized prior to coating with an intumescent composition.

Preferably, the hydrophobizing agent is selected from the group consisting of organosilanes, silazanes, acyclic or cyclic polysiloxanes and mixtures thereof.

The organosilanes can have a general chemical formula R₃SiX, R₂SiX₂, R₃SiX, where each R is independently a linear, branched or cyclic saturated or unsaturated hydrocarbon radical having 1 to 30 carbon atoms, preferably 1 to 18 carbon atoms, such as, for example, methyl, ethyl, n-propyl, i-propyl, butyl, octyl, hexadecyl, cyclohexyl, vinyl. Hydrocarbon radical R can be aliphatic, aromatic, for example, phenyl or substituted phenyl residues, heteroaromatic, or mixed aliphatic-aromatic and further be substituted with functional groups, such as those containing fluorine, nitrogen, sulfur substituents, e.g. -C₄F₉, -NH₂, -SCN, -SH, and others.
X can be a halogen, e.g. chlorine, bromine, fluorine, preferably chlorine;
alkoxy substituent OR with R having the same meaning as above described, preferably methoxy, ethoxy, n-propoxy or iso-propoxy group;
carboxyloxy substituent, preferably formyloxy, acetoxy, propanoxy group.

Silazanes of the general formula R'R₂Si-NH-SiR₂R', wherein R = alkyl, such as methyl, ethyl, propyl; R' = alkyl, vinyl, are also suitable as a surface treatment agent. The most preferred silazane is hexamethyldisilazane (HMDS).

Also suitable as hydrophobizing agents are cyclic polysiloxanes, such as octamethylcyclotetrasiloxane (D4), decamethylcyclopentasiloxane (D5), dodecamethylcyclohexasiloxane (D6), hexamethylcyclotrisiloxane (D6). Most preferably among cyclic polysiloxanes, D4 is used.

Another useful type of hydrophobizing agents is polysiloxanes or silicone oils. Most preferably among polysiloxanes and silicone oils are polydimethylsiloxanes with a typical molar mass of 162 g/mol to 7500 g/mol, a density of 0.76 g/mL to 1.07 g/mL and viscosities of 0.6 mPa*s to 1 000 000 mPa*s.

Particularly preferably, the hydrophobizing agent is selected from the group consisting of chlorotrimethylsilane (TMSCI), dichlorodimethylsilane (DDS), hexamethyldisilazane (HMDS) and mixtures thereof. Most preferable is hexamethyldisilazane (HMDS).

### Steps c) and d)

In step c) of the inventive process, the optionally hydrophobized thermal-insulation sheet is coated with a layer of an intumescent composition comprising at least one polyol, at least one nitrogen-containing compound, at least one phosphorus-containing compound, and a binder.

The dynamic viscosity of the intumescent composition used in step c) of the process according to the invention, i.e. before curing and/or polymerization of the composition, is preferably no more than 100000 cP, more preferably not more than 50000 cP, more preferably no more than 10000 cP, still more preferably up to 5000 cP. "Dynamic Viscosity" in centipoise (1 cP = mPa×s) is understood to mean viscosity, which can be measured according to ASTM D7042-04.

All usual coating techniques, such as brushing, spraying etc. known to the one skilled in the art, can be used for applying the intumescent composition on the surface of the thermal-insulation sheet.

In step d) of the inventive process, drying and/or curing of the polymer-based intumescent composition occurs to solidify and harden the initially liquid composition. The drying and/or curing of the composition can be achieved by at least partial polymerization of the reactive binder and/or vaporization of the solvent. Depending on the system used, this step can preferably take place at a temperature of from 0 °C to 500°C, particularly preferably from 5 to 400°C, very particularly preferably from 10 to 300°C. The drying and/or curing can take place in the presence of air or with exclusion of oxygen, for example under a protective-gas atmosphere of nitrogen or carbon dioxide. Said step can take place under standard pressure or under a reduced pressure, for example under vacuum.

### Use of the coated thermal-insulation sheet

The invention further comprises thermal-insulation composite comprising the coated thermal-insulation sheet according to the invention and optionally at least one material selected from polystyrene foam, polyurethane foam, cellulose, wool.

Thus, typical flammable organic thermal-insulation materials such as polystyrene foam, polyurethane foam, cellulose, wool and other materials can be covered with the coated thermal-insulation sheet according to the invention to improve the overall thermal insulation and, most importantly, fire-resistance of the resulting thermal-insulation composite. One or several such organic thermal-insulation materials can be joined together with one or several thermal-insulation sheets of the present invention to form a thermal-insulation composite, mechanically, e.g. with nails or similar fixation elements or by means of typical adhesives known to the person skilled in the art.

The coated thermal-insulation sheet according to the invention or the thermal-insulation composite of the invention can be used for thermal or acoustic insulation, especially for thermal insulation of walls, roofs, houses, industrial plants, tanks, ducts, parts of industrial apparatuses, process pipelines and suchlike.

Preferably, the coated thermal-insulation sheet according to the invention or the thermal-insulation composite of the invention can be used as thermal-insulation materials with fire-retardant properties, for example in thermal-insulation elements which due to safety reasons, should be fireproof for an extended period of time, such as for example for balconies, porticos, arcades, walls, doors and suchlike.

### Example

A commercially available hydrophobized silica-based thermal-insulation sheet with a size L×W×H = 1000×120×20 mm, density of 165 kg/m³ (CALOSTAT^{®}, manufacturer Evonik Resource Efficiency GmbH) was fixed with an adhesive (Ramsauer "645 Flächenkleber", manufacturer Ramsauer Gmbh & Co KG) on both sides of a commercially available thermal-insulation sheet of the same L×W dimension (height: 200 mm, density 35 kg/m³, Neopor^{®}, manufacturer: BASF).

This thermal-insulation composite was directly, without any pre-treatment, coated with a solvent-free 2-component fire-resistant intumescent epoxy coating containing ammonium polyphosphate and pentaerythritol (Unitherm^{®} PLATINUM, manufacturer SIKA) by means of spraying.

After drying and curing of the composite under ambient conditions, the surface of the silica-based thermal-insulation sheet became very mechanically stable, i.e. showed less mechanical attrition and more impact-resistance, than the uncoated CALOSTAT thermal-insulation sheet.

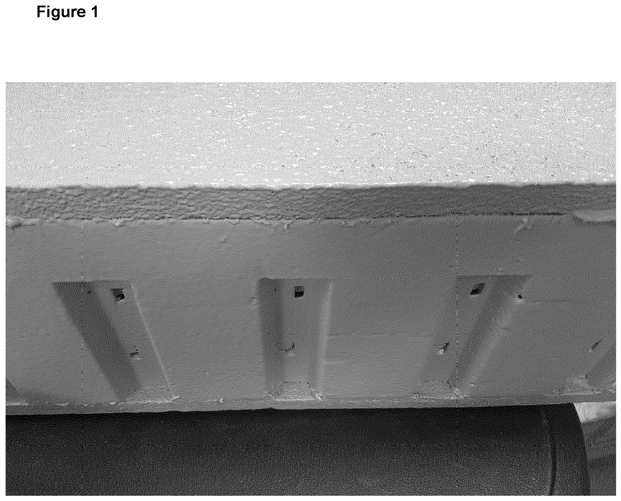

The thus prepared coated thermal-insulation composite, shown in Figure 1, can be well used as one mechanically stable thermal-insulation unit. In case of fire, the intumescent layer of the coating expands to form a protecting carbon char layer, which provides additional fire protection for this thermal-insulation composite.

## Claims

1. Coated thermal-insulation sheet comprising at least 50 % by weight of silica, coated with a layer of an intumescent composition, wherein the composition comprises at least one polyol, at least one nitrogen- containing compound, at least one phosphorus-containing compound, and at least one binder, wherein the binder is selected from the group consisting of (meth)acrylates, alkyd resins, epoxy resins, gum Arabic, casein, vegetable oils, silicone resins, wax, cellulose glue and mixtures thereof.

2. Thermal-insulation sheet according to Claim 1 **characterized in that** the silica is selected from the group consisting of fumed silica, precipitated silica, silica aerogel, silica xerogel, silicate mineral or clay, perlite, silica glass, mineral wool, and mixtures thereof.

3. Thermal-insulation sheet according to Claim 1 or 2, **characterized in that** the thermal insulation sheet comprises an IR-opacifier selected from the group consisting of silicon carbide, titanium dioxide, zirconium dioxide, ilmenites, iron titanates, iron oxides, zirconium silicates, manganese oxides, graphites, carbon blacks and mixtures thereof.

4. Thermal-insulation sheet according to Claims 1 to 3, **characterized in that** the sheet contains 50% - 96.5% by weight of silica, 3% - 30% by weight of an IR-opacifier, and 0.5% - 20% by weight of carbon.

5. Thermal-insulation sheet according to any of Claims 1 to 4, **characterized in that** the intumescent composition comprises 1%-15% by weight of at least one polyol, 1%-20% by weight of at least one nitrogen-containing compound, 1%-15% by weight of at least one phosphorus-containing compound, and 50%-97% by weight of at least one binder.

6. Thermal-insulation sheet according to any of Claims 1 to 5, **characterized in that** the sheet has a thickness from 10 mm to 150 mm.

7. Thermal-insulation sheet according to any of Claims 1 to 6, **characterized in that** the polyol is selected from the group consisting of ethylene glycol, glycerol, pentaerythritol, dipentaerythritol, tripentaerythritol, maltitol, sorbitol, xylitol, isomalt, polyvinyl alcohol, and mixtures thereof.

8. Thermal-insulation sheet according to any of Claims 1 to 7, **characterized in that** the nitrogen-containing compound is selected from the group consisting of ammonia, ammonium salts, amines, tetraalkylammonium salts, melamine compounds, and mixtures thereof.

9. Thermal-insulation sheet according to any of Claims 1 to 8, **characterized in that** the phosphorus-containing compound is selected from the group consisting of triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates, resorcinol bis(diphenyl phosphate), bisphenol A bis(diphenyl phosphate), ammonium phosphate, ammonium polyphosphates, red phosphorus and phosphoric acid, and mixtures thereof.

10. Thermal-insulation sheet according to any of Claims 1 to 9, **characterized in that** the layer of the intumescent composition has a thickness of 0.2 mm to 20 mm.

11. Process for producing the coated thermal-insulation sheet according to any of Claims 1 to 10, comprising the steps:
a. producing a thermal-insulation sheet comprising silica;
b. optional treatment of the thermal-insulation sheet with a hydrophobizing agent to obtain a hydrophobized thermal-insulation sheet;
c. coating of the optionally hydrophobized thermal-insulation sheet with a layer of an intumescent composition comprising at least one polyol, at least one nitrogen- containing compound, at least one phosphorus-containing compound, and at least one binder;
d. drying and/or curing of the composition.

12. Thermal insulation composite comprising the coated thermal-insulation sheet according to any of Claims 1 to 10 and at least one material selected from polystyrene foam, polyurethane foam, cellulose, wool.

13. Use of the coated thermal-insulation sheet according to any of Claims 1 to 10 or the thermal insulation composite according to Claim 12 for thermal or acoustic insulation.

14. Use according to Claim 13 in thermal-insulation elements with fire-retardant properties for balconies, porticos, arcades, walls, doors and suchlike.

## Patentansprüche

1. Beschichtetes Wärmeisolationsflächenelement, welches zumindest 50 Gewichtsprozent Siliziumdioxid aufweist, welches mit einer Schicht einer intumeszenten bzw. sich aufblähenden Zusammensetzung beschichtet ist, wobei die Zusammensetzung zumindest ein Polyol, zumindest eine Stickstoff enthaltende Komponente, zumindest eine Phosphor enthaltende Komponente und zumindest einen Binder aufweist, wobei der Binder ausgewählt ist aus der Gruppe bestehend aus (Meth)Acrylaten, Alkydharzen, Epoxidharzen, Gummi Arabicum, Casein, Pflanzenöle, Silikonharze, Wachs, Zellulosekleister und Mischungen davon.

2. Beschichtetes Wärmeisolationsflächenelement nach Anspruch 1, **dadurch gekennzeichnet, dass** das Siliziumdioxid ausgewählt ist aus der Gruppe bestehend aus pyrogenem Siliziumdioxid, gefälltem Siliziumdioxid, Siliziumdioxidaerogel, Siliziumdioxidxerogel, Silikatmineral oder -ton, Perlit, Siliziumdioxidglas, Mineralwolle und Mischungen davon.

3. Beschichtetes Wärmeisolationsflächenelement nach Anspruch 1 oder 2, **dadurch gekennzeichnet, dass** das Wärmeisolationsflächenelement ein IR-Trübungsmittel aufweist, das ausgewählt ist aus der Gruppe bestehend aus Siliziumcarbid, Titandioxid, Zirkondioxid, Ilmeniten, Eisentitanaten, Eisenoxiden, Zirkonsilikaten, Manganoxiden, Graphiten, Aktivkohle bzw. Industrierußen und Mischungen davon.

4. Beschichtetes Wärmeisolationsflächenelement nach Anspruch 1 bis 3, **dadurch gekennzeichnet, dass** das Flächenelement 50 - 96,5 Gewichtsprozent Siliziumdioxid, 3 - 30 Gewichtsprozent eines IR-Trübungsmittels und 0,5 - 20 Gewichtsprozent Kohlenstoff enthält.

5. Beschichtetes Wärmeisolationsflächenelement nach einem der Ansprüche 1 bis 4, **dadurch gekennzeichnet, dass** die intumeszente bzw. sich aufblähende Zusammensetzung 1 - 15 Gewichtsprozent von mindestens einem Polyol, 1 - 20 Gewichtsprozent von mindestens einer Stickstoff enthaltenden Komponente, 1 - 15 Gewichtsprozent von mindestens einer Phosphor enthaltenden Komponente und 50 - 97 Gewichtsprozent von mindestens einem Binder aufweist.

6. Beschichtetes Wärmeisolationsflächenelement nach einem der Ansprüche 1 bis 5, **dadurch gekennzeichnet, dass** das Flächenelement eine Dicke von 10 mm bis 150 mm hat.

7. Beschichtetes Wärmeisolationsflächenelement nach einem der Ansprüche 1 bis 6, **dadurch gekennzeichnet, dass** das Polyol ausgewählt ist aus der Gruppe bestehend aus Ethylenglykol, Glycerol, Pentaeritritol, Dipentaeritritol, Tripentaeritritol, Malitol, Sorbitol, Xylitol, Isomalt, Polyvinylalkohol und Mischungen davon.

8. Beschichtetes Wärmeisolationsflächenelement nach einem der Ansprüche 1 bis 7, **dadurch gekennzeichnet, dass** die Stickstoff enthaltende Komponente ausgewählt ist aus der Gruppe bestehend aus Ammoniak, Ammoniumsalzen, Aminen, Tetraalkylammoniumsalzen, Melaminverbindungen und Mischungen davon.

9. Beschichtetes Wärmeisolationsflächenelement nach einem der Ansprüche 1 bis 8, **dadurch gekennzeichnet, dass** die Phosphor enthaltende Verbindung ausgewählt ist aus der Gruppe bestehend aus Triethylphosphat, Triesylphosphat, Triphenylphosphat, Diphenylcresylphosphat, Isodecyldiphenylphosphat, Tris(1,3-Dichloro-2-Propyl)Phosphat, Tris(2-Chloroethyl)Phosphat, Tris(2-Ethylhexyl)Phosphat, Tris(Chloroisopropyl)Phosphat, Tris(Chloropropyl)Phosphat, isoprofiliertes Triphenylphosphat, Mono-, Bis- oder Tris(Isopropylphenyl)Phosphate, Resorcinol-Bis(Diphenylphosphate), Bisphenol A Bis(Diphenylphosphate), Ammoniumphosphat, Ammoniumpolyphosphate, roten Phosphor und Phosphorsäure und Mischungen davon.

10. Beschichtetes Wärmeisolationsflächenelement nach einem der Ansprüche 1 bis 9, **dadurch gekennzeichnet, dass** die Schicht der intumeszenten bzw. sich aufblähenden Zusammensetzung eine Dicke von 0,2 mm bis 20 mm hat.

11. Verfahren zur Herstellung des beschichteten Wärmeisolationsflächenelementes nach einem der Ansprüche 1 bis 10, welches folgende Schritte aufweist:
a. Erzeugen eines Wärmeisolationsflächenelementes, welches Siliziumdioxid aufweist;
b. optionale Behandlung des Wärmeisolationsflächenelementes mit einem hydrophobisierenden Mittel, um ein hydrophobisiertes Wärmeisolationsflächenelement zu erhalten;
c. Beschichten des optional hydrophobisierten Wärmeisolationsflächenelementes mit einer Schicht einer intumeszenten bzw. sich aufblähenden Zusammensetzung, welche mindestens ein Polyol, mindestens eine Stickstoff enthaltende Komponente, mindestens eine Phosphor enthaltende Komponente und mindestens einen Binder aufweist;
d. Trocknen und/oder Aushärten der Zusammensetzung.

12. Wärmeisolationsverbundelement, welches das beschichtete Wärmeisolationsflächenelement nach einem der Ansprüche 1 bis 10 und zumindest ein Material aufweist, welches ausgewählt ist aus Polystyrolschaum, Polyurethanschaum, Zellulose, Wolle.

13. Anwendung des beschichteten Wärmeisolationsflächenelementes nach einem der Ansprüche 1 bis 10 oder des Wärmeisolationsverbundelementes nach Anspruch 12 für Wärmeisolation oder akustische Isolation.

14. Verwendung nach Anspruch 13 in Wärmeisolationselementen mit feuerhemmenden Eigenschaften für Balkone, Vorbauten, Arkaden, Wände, Türen und Ähnliches.

## Revendications

1. Feuille d'isolation thermique enduite comprenant au moins 50% en poids de silice, enduite d'une couche d'une composition intumescente, dans laquelle la composition comprend au moins un polyol, au moins un composé azoté, au moins un composé phosphoré, et au moins un liant, dans laquelle le liant est choisi dans le groupe constitué par les (méth)acrylates, les résines alkydes, les résines époxy, la gomme arabique, la caséine, les huiles végétales, les résines de silicone, la cire, la colle cellulosique et leurs mélanges.

2. Feuille d'isolation thermique selon la revendication 1, **caractérisée en ce que** la silice est choisie dans le groupe constitué par la silice pyrogénée, la silice précipitée, l'aérogel de silice, le xérogel de silice, le silicate minéral ou l'argile, la perlite, le verre de silice, la laine minérale, et leurs mélanges.

3. Feuille d'isolation thermique selon la revendication 1 ou 2, **caractérisée en ce que** ladite feuille d'isolation thermique comprend un opacifiant IR choisi dans le groupe constitué par le carbure de silicium, le dioxyde de titane, le dioxyde de zirconium, les ilménites, les titanates de fer, les oxydes de fer, les silicates de zirconium, les oxydes de manganèse, les graphites, les noirs de carbone, et leurs mélanges.

4. Feuille d'isolation thermique selon les revendications 1 à 3, **caractérisée en ce que** ladite feuille contient 50% - 96,5% en poids de silice, 3% - 30% en poids d'un opacifiant IR, et 0,5% - 20% en poids de carbone.

5. Feuille d'isolation thermique selon l'une quelconque des revendications 1 à 4, **caractérisée en ce que** la composition intumescente comprend 1%-15% en poids d'au moins un polyol, 1%-20% en poids d'au moins un composé azoté, 1%-15% en poids d'au moins un composé phosphoré, et 50%-97% en poids d'au moins un liant.

6. Feuille d'isolation thermique selon l'une quelconque des revendications 1 à 5, **caractérisée en ce que** ladite feuille a une épaisseur de 10 mm à 150 mm.

7. Feuille d'isolation thermique selon l'une quelconque des revendications 1 à 6, **caractérisée en ce que** le polyol est choisi dans le groupe constitué par l'éthylèneglycol, le glycérol, le pentaérythritol, le dipentaérythritol, le tripentaérythritol, le maltitol, le sorbitol, le xylitol, l'isomalt, l'alcool polyvinylique, et leurs mélanges.

8. Feuille d'isolation thermique selon l'une quelconque des revendications 1 à 7, **caractérisée en ce que** le composé azoté est choisi dans le groupe constitué par l'ammoniac, les sels d'ammonium, les amines, les sels de tétraalkylammonium, les composés de mélamine, et leurs mélanges.

9. Feuille d'isolation thermique selon l'une quelconque des revendications 1 à 8, **caractérisée en ce que** le composé phosphoré est choisi dans le groupe constitué par le phosphate de triéthyle, le phosphate de tricrésyle, le phosphate de triphényle, le phosphate de diphénylcrésyle, le phosphate d'isodécyldiphényle, le phosphate de tris(1,3-dichloro-2-propyle), le phosphate de tris(2-chloroéthyle), le phosphate de tris(2-éthylhexyle), le phosphate de tris(chloroisopropyle), le phosphate de tris(chloropropyle), le phosphate de triphényle isopropylé, les phosphates de mono-, bis- ou tris(isopropylphényle), le bis(diphénylphosphate) de résorcinol, le bis(diphénylphosphate) de bisphénol A, le phosphate d'ammonium, les polyphosphates d'ammonium, le phosphore rouge et l'acide phosphorique, et leurs mélanges.

10. Feuille d'isolation thermique selon l'une quelconque des revendications 1 à 9, **caractérisée en ce que** la couche de composition intumescente a une épaisseur de 0,2 mm à 20 mm.

11. Procédé de production de la feuille d'isolation thermique enduite selon l'une quelconque des revendications 1 à 10, comprenant les étapes suivantes :
a. production d'une feuille d'isolation thermique comprenant de la silice ;
b. traitement facultatif de la feuille d'isolation thermique par un agent hydrophobisant pour obtenir une feuille d'isolation thermique hydrophobisée ;
c. enduction de la feuille d'isolation thermique facultativement hydrophobisée avec une couche d'une composition intumescente comprenant au moins un polyol, au moins un composés azoté, au moins un composé phosphoré, et au moins un liant ;
d. séchage et/ou durcissement de la composition.

12. Composite d'isolation thermique comprenant la feuille d'isolation thermique enduite selon l'une quelconque des revendications 1 à 10 et au moins un matériau choisi parmi la mousse de polystyrène, la mousse de polyuréthane, la cellulose, la laine.

13. Utilisation de la feuille d'isolation thermique enduite selon l'une quelconque des revendications 1 à 10 ou du composite d'isolation thermique selon la revendication 12 pour l'isolation thermique ou acoustique.

14. Utilisation selon la revendication 13 dans des éléments d'isolation thermique ayant des propriétés ignifuges pour des balcons, des portiques, des arcades, des murs, des portes, etc.
